# EUROPEAN PATENT APPLICATION

(11) **EP 1 469 284 A1**
(43) Date of publication of application: **20.10.2004**
(21) Application number: 04007625.9
(22) Date of filing: 30.03.2004
(51) Int. Cl.: G01C 21/26, G08G 1/0969

(54) **Information processing system with identification**

(30) Priority: 18.04.2003 JP 2003114816
(71) Applicant: AISIN AW CO., LTD., Anjo-shi Aichi 444-1192 (JP)
(72) Inventor: Ishibashi, Noboru, Anjo-shi Aichi 444-1192 (JP); Yamada, Kunihiro, Anjo-shi Aichi 444-1192 (JP)
(74) Representative: Kramer - Barske - Schmidtchen

(57) **Abstract**

An information processing apparatus using an ID makes it possible to use content, such as various types of data and programs, without causing failure in collecting royalties by enabling a unique ID to be set even in an apparatus in which no ID is set in a production stage. The information processing apparatus using an ID sets, in the apparatus, content which is made usable by setting a release key in the apparatus and an ID setting program, executes processing in accordance with the ID setting program, and creates an ID unique to the apparatus which is registered to enable the release key to be acquired.

## Description

The present invention relates to an information processing apparatus using identification (hereinafter, referred to as ID).

In a known navigation apparatus mounted on a vehicle such as an automobile, by operating a predetermined input unit to designate a destination by an operator such as a driver, based on the destination and the present position of the vehicle which is detected by a positional detecting processor, a route from the present position to the destination is found and the found route is shown. In this case, the navigation apparatus finds the route based on map data which includes search data and road data and which is stored in a storage medium such as a CD-ROM or a DVD-ROM. A map is displayed on a screen of a display unit based on the map data, and route guidance is performed by displaying the found route on the map. In addition, at intersections, etc., audio guidance is also performed.

Furthermore, the navigation apparatus can find various facilities, such as restaurants and hotels, based on the map data. In this case, not only information of a found facility is displayed on the screen of the display unit, but also its position is identified. Thus, a route to the found facility can also be found by setting the found facility as a destination.

However, since the navigation apparatus finds a route based on the map data stored in the storage medium, it cannot find an appropriate route when a new road is open to traffic. Also, when a new facility is built, the navigation apparatus cannot find it since it is not included in the map data. When an existing facility is demolished, information of a facility that does not exist at the present time and a route to the facility are displayed, so that false information is supplied to the operator.

The Japanese Unexamined Patent Application Publication No. 11-257975 which is incorporated herein by reference discloses a navigation apparatus which switches the storage medium to one storing new map data and which can update the map data by using communication means. This makes it possible to find an appropriate route and to find an appropriate facility, even if a new road is open to traffic, a new facility is built, or an existing facility is demolished.

In the navigation apparatus of the related art, however, it is required that an ID be set beforehand. When the ID is not set, the navigation apparatus is prohibited from switching the storage medium to one storing new map data and downloading new map data. Accordingly, in the case of a navigation apparatus in which no ID is set in a stage in which the navigation apparatus is produced in a factory, the navigation apparatus cannot update the map data.

For even the navigation apparatus in which the ID is not set, it is possible to enable updating of map data. In this case, a royalty on the new map data cannot be appropriately collected. In other words, the royalty may fail to be collected.

In view of the above, it is an object of the present invention to provide an information processing apparatus using ID in which, by enabling a unique ID to be set in even an apparatus having no ID set therein in a production stage, content, such as various types of data and programs, is made usable without causing failure in collecting royalties.

This object is achieved by the subject-matter of claim 1. Further developments of the invention are given in the sub-claims.

Preferred embodiments of the invention are described in detail with reference of the accompanying drawings.
Fig. 1 is a flowchart showing the process of setting a unique ID executed by a car-mounted apparatus according to a first embodiment of the present invention;
Fig. 2 is a block diagram showing the structure of the car-mounted apparatus according to the first embodiment of the present invention;
Fig. 3 shows a first example of a method for creating a unique ID executed by a car-mounted apparatus according to a second embodiment of the present invention;
Fig. 4 shows a second example of a method for creating a unique ID executed by the car-mounted apparatus according to the second embodiment of the present invention;
Fig. 5 shows a third example of a method for creating a unique ID executed by the car-mounted apparatus according to the second embodiment of the present invention;
Fig. 6 is a flowchart showing the operation of an ID creating process according to the second embodiment of the present invention;
Fig. 7 shows a method for creating a unique ID executed by a car-mounted apparatus according to a third embodiment of the present invention; and
Fig. 8 shows a method for creating a unique ID executed by a car-mounted apparatus according to a fourth embodiment of the present invention.

The present invention is described in further detail below with reference to preferred embodiments in conjunction with the accompanying drawings.

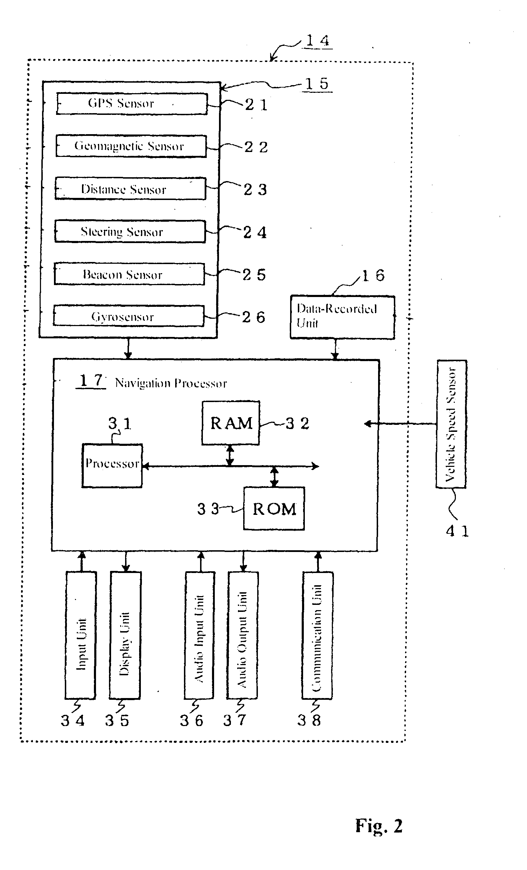

Fig. 2 is a block diagram showing the structure of a car-mounted apparatus according to a first embodiment of the present invention.

Referring to Fig. 2, a car-mounted apparatus 14 is an apparatus which is mounted on a vehicle, such as a passenger car, a truck, a bus, or a motorbike, and which functions as a navigation apparatus. The car-mounted apparatus 14 is a type of computer including arithmetic means such as a CPU and an MPU, storage means such as a semiconductor memory and a magnetic disk, display means such as a CRT, a liquid crystal display, an LED (Light Emitting Diode), input means such as a keyboard, a joystick, a touch panel, push buttons, a rotary dial, and a remote controller, and an input/output interface.

The car-mounted apparatus 14 may not be mounted on a vehicle, or does not need to function as a navigation apparatus, and may be any type of apparatus if it can use content, such as various types of data and programs, by updating or setting the content. The car-mounted apparatus 14 may be, for example, a personal computer, a cellular phone, a PHS (Personal Handy-Phone System) telephone, a telephone set of a stationary type, a PDA (Personal Digital Assistant), an electronic notebook, a portable information terminal, a game machine, a digital television, or the like.

In this embodiment, for convenience of description, only a case is described in which the car-mounted apparatus 14 is a navigation apparatus mounted on a vehicle. In this case, based on search data and map data including road data which are stored in a storage medium, the car-mounted apparatus 14 can perform finding a route, finding a facility, etc., displaying a map on a display unit 35, which is described later, and displaying the found route, facility, etc., on the map.

As shown in Fig. 2, the car-mounted apparatus 14 includes a present position detecting processor 15 for detecting the present position, a data-recorded unit 16 having recorded road data, etc., a navigation processor 17 for performing various arithmetic processes based on input information, such as a navigation process, an input unit 34, a display unit 35, an audio input unit 36, an audio output unit 37, and a communication unit 38. A vehicle speed sensor 41 is connected to the navigation processor 17.

The present position detecting processor 15 consists of a GPS (Global Positioning System) sensor 21, a geomagnetic sensor 22, a distance sensor 23, a steering sensor 24, a beacon sensor 25, a gyrosensor 26, and an altimeter, which is not shown, etc. Some of the GPS sensor 21, the geomagnetic sensor 22, the distance sensor 23, the steering sensor 24, the beacon sensor 25, the gyrosensor 26, and the altimeter, etc., can be omitted, if needed, from a viewpoint of a production cost or the like.

The GPS sensor 21 detects the present position on the earth by receiving radio waves generated by a GPS satellite as an artificial satellite. By measuring magnetism, the geomagnetic sensor 22 detects a bearing to which the vehicle is directed. The distance sensor 23 detects the distance between predetermined positions on a road, or the like. As the distance sensor 23, for example, a sensor which measures the number of revolutions of a vehicle, which is not shown, and which detects a distance based on the measured number of revolutions, a sensor that detects a distance by measuring an acceleration and integrating the acceleration twice, or the like, may be used.

The steering sensor 24 detects a rudder angle, and as the steering sensor 24, for example, an optical rotary sensor or rotary resistance sensor which is provided on a rotating part of a steering wheel, which is not shown, an angular sensor, or the like, is used.

The beacon sensor 25 detects the present position by receiving positional information from beacons provided along the road. The gyrosensor 26 detects an angular rate of rotation of the vehicle, that is, an angle of traverse, and as the gyrosensor 26, for example, a gas rate gyroscope, a vibrating gyroscope, or the like. By integrating the angle of traverse detected by the gyrosensor 26, the bearing to which the vehicle is directed can be detected.

The GPS sensor 21 and the beacon sensor 25 can separately detect the present position. By combining the distance detected by the distance sensor 23 and the bearing detected by the geomagnetic sensor 22 and the gyrosensor 26, the present position can also be detected. Also, by combining the distance detected by the distance sensor 23 and the rudder angle detected by the steering sensor 24, the present position can be detected.

The data-recorded unit 16 contains a database composed of a map data file, an intersection data file, a node data file, a road data file, a photo-data file, and a facility-information data file having recorded facility information such as hotels, gas stations, tourist information centers, etc., in areas. In addition to route finding data, various types of data are recorded in the data-recorded unit 16 which are for displaying, on the screen of the display unit 35, a guide map along the found route, characteristic photographs at intersections or on the route, the distance to the next intersection, a traveling direction at the next intersection, etc., and which are for displaying other guidance. In the data-recorded unit 16, various types of data for outputting predetermined information by the audio output unit 37 are also recorded.

Intersection data, node data, and road data are recorded in the intersection data file, the node data file, and the road data file, respectively. Based on the intersection data, the node data, and the road data, road conditions are displayed on the screen. The intersection data includes intersection types, that is, data about whether traffic lights are installed or are not installed at an intersection. Also, the node data constitutes at least the positions and shapes of roads in the map data recorded in the map data file, and includes data representing actual road bifurcations (including intersections and T-junctions), node points, and links connecting node points. The node points represent at least bending points on the roads.

The road data includes data concerning the roads themselves, such as widths, gradients, cants, altitudes, banks, surface conditions, the numbers of lanes, points at each of which the number of lanes decreases, and points at which road widths narrow. In the case of express highways and arterial roads, for oncoming lanes, separate road data items are stored and are processed with them treated as pair roads. For example, in the case of arterial roads each having four or more lanes, road data is processed with it treated as pair roads, and for inbound lanes and outbound lanes, road data items representing separate roads are stored. Also, corner data includes data concerning curvature radiuses, intersections, T-junctions, corner entries, etc. In addition, road attributes include data concerning crossing places, express-highway entry/exit ramp ways, express-way tollgates, descending surfaces, ascending surfaces, road types (national routes, principal local roads, ordinary roads, express highways, etc.), etc.

The navigation processor 17 includes a processor 31 for controlling the entirety of the car-mounted apparatus 14, a RAM 32 which is used as a working memory when the processor 31 performs various arithmetic processes, and a ROM 33 as a recording medium in which, in addition to control programs, various programs for finding routes to destinations, performing traveling guidance on the route, determining particular sections, and finding locations, facilities, etc., are recorded. The navigation processor 17 connects to the input unit 34, the display unit 35, the audio input unit 36, the audio output unit 37, and the communication unit 38. The navigation processor 17 performs various processes such as finding routes to destinations, performing traveling guidance on the route, determining particular sections, and finding locations, facilities, etc. Some of the audio input unit 36, and the audio output unit 37, and the communication unit 38 can be omitted, if needed, from a viewpoint of the production cost, etc.

The data-recorded unit 16 and the ROM 33 include magnetic cores and semiconductor memories (not shown). Various recording media, such as magnetic tapes, magnetic disks, magnetic drums, CD-ROMs, CD-R/Ws, MDs, DVD-ROMs, DVD-R/Ws, DVD-RAMs, optical disks, MOs, IC cards, optical cards, memory cards, stick memories, can be used as the data-recorded unit 16 and the ROM 33. The recording media may be those installed in the car-mounted apparatus 14 beforehand, or may be those which can also be replaced by a driver or the like.

The communication unit 38 transmits and receives various types of data to/from an FM transmitter, a telephone network, the Internet, a cellular phone network, or the like. The communication unit 38 receives, for example, various types of data such as road information concerning traffic jams which is received by an information sensor or the like (not shown), traffic accident information, and D-GPS information detecting detection error of the GPS sensor 21. Also, a program and data for bringing the car-mounted apparatus 14 into operation, etc., can be transmitted from an information center (an Internet server, a navigating server, or the like) to a plurality of base stations (such as an Internet provider terminal, a communication station connected to the communication unit 38 through a telephone line, a communication line, or the like), and can be further transmitted from each base station to the communication unit 38. In the case of using this type of system, when at least part of the program and data transmitted from each base station is received, the processor 31 can download the received part to a readable/writable memory, for example, a recording medium such as the RAM 32, a flash memory, or a hard disk, and can perform various processes based on data by activating the program. In this case, for example, the program and data can be recorded in different recording media and can be recorded in a single recording medium.

In addition, by using a personal computer for home use, the program and data, etc., transmitted from the information center can be downloaded to a recording medium such as a memory card, a flexible disk, or the like, which is removable from the personal computer, and by activating the program, various processes can also be performed based on the data.

The input unit 34 is used for correcting a position at the start of traveling and for inputting a destination, and includes operation keys, push buttons, a jog dial, and a cross key which are provided on the main body of the car-mounted apparatus 14. The input unit 34 may be a remote controller. When the display unit 35 is a touch panel, it is preferable that the touch panel includes operation switches displayed on the screen of the display unit 35, such as operation keys and an operation menu. In this case, similarly to an ordinary touch panel, inputting can be performed by pressing (touching) the operation switches.

Displayed on the screen of the display unit 35 are operation guidance, an operation menu, operation-key guidance, routes from the present position to a destination, information of guidance along the routes, etc. As the display unit 35, a CRT display, a liquid crystal display, an LED display, a plasma display, a hologram display unit that projects a hologram on a front glass, or the like, can be used.

The audio input unit 36 is formed by a microphone or the like (not shown), and can input necessary information through speech. The audio output unit 37 further includes a speech synthesizer and a speaker (not shown), and informs the operator by outputting, from the speaker, speech information, for example, guidance information, speed-change information, etc., which are formed by speeches synthesized by the speech synthesizer. In addition to the speeches synthesized by the speech synthesizer, various sounds, various types of guidance information recorded beforehand as sound on a tape or in a memory, or the like, can be output from the speaker.

Although various types of data can be recorded in the data-recorded unit 16, and various programs can be recorded in the ROM 33 in this embodiment, content, such as the data recorded in the data-recorded unit 16 and the programs recorded in the ROM 33, can be updated. For example, by using the communication unit 38 to download content, such as new version data and programs, etc., from the information center, old version content, such as the data recorded in the data-recorded unit 16 and the programs, etc., recorded in the ROM 33, may be upgraded, that is, may also be updated.

In addition, by connecting, to an interface (not shown) a removable recording medium with the new version data and programs, etc., recorded therein, such as a magnetic tape, a magnetic disk, a magnetic drum, a CD-ROM, a CD-R/W, an MD, a DVD-ROM, a DVD-R/W, a DVD-RAM, an optical disk, an MO, an IC card, a memory card, or a stick memory, and using the new version data and programs, etc., the old version content, such as the data recorded in the data-recorded unit 16 and the programs, etc., recorded in the ROM 33, may also be updated.

Furthermore, when the data-recorded unit 16 or the ROM 33 includes a removable recording medium, such as a magnetic tape, a magnetic disk, a magnetic drum, a CD-ROM, a CD-R/W, an MD, a DVD-ROM, a DVD-R/W, a DVD-RAM, an optical disk, an MO, an IC card, a memory card, or a stick memory, and content, such as data and programs, is recorded in the removable recording medium, by replacing the removable recording medium with a removable recording medium having new version content recorded therein, the content, such as the data recorded in the data-recorded unit 16 and the programs, etc., recorded in the ROM 33, may also be updated.

In this embodiment, it is assumed that, in the ROM 33 or another storage means, an ID for identifying the car-mounted apparatus 14 is not recorded. In general, when it is necessary to set an ID in an apparatus such as a navigation apparatus, the ID can be recorded in a nonvolatile storage means, such as the ROM 33, in a stage in which the apparatus is produced in a factory. In the car-mounted apparatus 14 in this embodiment, however, it is assumed that no ID is set.

The process of the car-mounted apparatus 14 will now be described below.

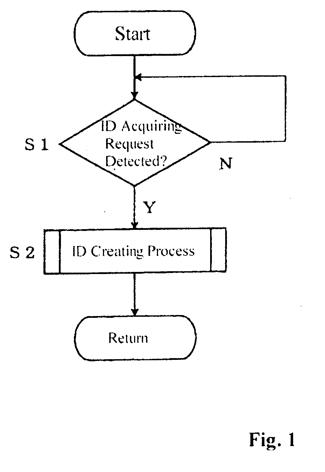

Fig. 1 is a flowchart showing a process of setting a unique ID executed by the car-mounted apparatus 14 according to the first embodiment of the present invention.

Herein, a process is described for a case in which map data, as the data recorded in the data-recorded unit 16, is updated such that the operator purchases a DVD-ROM as a recording medium having new version map data recorded therein and replaces a DVD-ROM having old version map data recorded therein by the purchased DVD-ROM. In this case, it is assumed that, in the DVD-ROM, also a program for setting a unique ID in the car-mounted apparatus 14 is recorded as an ID setting program. It is also assumed that the new version map data recorded in the DVD-ROM is prevented from being directly read by the navigation processor 17 in the car-mounted apparatus 14, and by inputting a predetermined release key, the DVD-ROM can be read by the navigation processor 17.

First, the operator purchases a DVD-ROM as a recording medium having the new version map data recorded therein. Then, the operator removes the DVD-ROM having the old version map data recorded therein, which is set as the recording medium in the data-recorded unit 16, by operating the car-mounted apparatus 14, for example, pressing an ejection button. Next, the operator sets, in the data-recorded unit 16, a DVD-ROM as a recording medium having the new version map data recorded therein. Accordingly, a program for setting the unique ID is read from the DVD-ROM and is activated by the navigation processor 17. In other words, the program is set in the car-mounted apparatus 14.

A setting screen is displayed on the screen of the display unit 35. Since the setting screen includes a start switch, the operator operates the input unit 34 to select the start switch. For example, when the display unit 35 is a touch panel, the operator selects the displayed start switch by pressing (touching) it. This allows the navigation processor 17 to determine that an ID acquiring request has been detected, so that the navigation processor 17 executes an ID creating process as a process in accordance with the program.

In the ID creating process in this embodiment, a randomly extracted code is created as an ID. In this case, the code is created based on a numeric value randomly acquired from 64-bit numeric data, and is formed by a combination of characters, such as numerals and alphabets, symbols, etc. The created ID is set as an ID for using the DVD-ROM having the new version data recorded therein.

The set ID is displayed on the screen of the display unit 35. The operator records the displayed ID, writes it on a predetermined form, and sends the form to a sales management center for the purchased DVD-ROM by means such as mailing. The ID is registered in the sales management center. Although an administrator of the sales management center is, for example, a manufacturer of the DVD-ROM, a sales agent, or the like, the administrator may be one entrusted by the manufacturer, the sales agent, or the like, and may be anyone.

Then, a recording medium storing a predetermined release key is sent back from the sales management center to the operator by means such as mailing. The operator sets, in the data-recorded unit 16, the recording medium storing the release key, whereby the release key is read by the navigation processor 17. This enables the navigation processor 17 to read the new version map data recorded in the DVD-ROM.

The process is described below with reference to a flowchart of Fig. 1.

Step S1. It is determined whether or not an ID acquiring request has been detected. If the request has been detected, the process proceeds to step S2. If not, the car-mounted apparatus 14 is on standby.

Step S2. The ID creating process is executed.

The set ID may be posted from the operator to the sales management center by means such as e-mail, facsimile; or telephone. Also, when the release key is a code formed by a combination of characters, such as numerals and alphabets, and symbols, etc., it may be posted from the sales management center to the operator by means such as e-mail, facsimile, or telephone. In this case, when the release key is set such that the operator operates the input unit 34 to input the code, the navigation processor 17 can read the new version map data.

In addition, the data to be updated may be data other than the map data, for example, data stored in the intersection data file, the node data file, the road data file, the photo-data file, the facility data file, etc. Instead of the data, a program, such as the navigation program, can be updated.

Furthermore, the recording medium having the new version data and programs recorded therein may be one other than a DVD-ROM. For example, it may be a magnetic tape, a magnetic disk, a magnetic drum, a CD-ROM, a CD-R/W, an MD, a DVD-R/W, a DVD-RAM, an optical disk, an MO, an IC card, a memory card, a stick memory, or the like.

Also, when the car-mounted apparatus 14 can communicate with the information center and can download data and programs from an Internet server, a navigating server, or the like, which is provided in the information center, the car-mounted apparatus 14 can also download new version data and programs. In this case, a program for setting the unique ID can be downloaded together with the new version data and programs.

The set ID is transmitted from the car-mounted apparatus 14 to the information center. The information center functions as a sales management center of the new version data and programs. After the ID is registered in the information center, the release key is transmitted from the information center to the car-mounted apparatus 14, and is set in the car-mounted apparatus 14. This enables the navigation processor 17 in the car-mounted apparatus 14 to use the downloaded new version data and programs.

This embodiment can be applied to cases other than updating of data and programs. For example, this embodiment can be also applied to a case in which completely new data and programs are set. Also in this case, setting of an ID by using the program for setting a unique ID, registration of the ID in the sales management center, and setting of a release key sent from the sales management center enable use of the completely new data and programs.

Content that is set or updated in the car-mounted apparatus 14 may be content other than data and programs, for example, music, video images, news, television programs, mail magazines, etc. For example, when the car-mounted apparatus 14 can communicate with the information center, and from an Internet server, a navigating server, or the like, which is provided in the information center, music, video images, news, television programs, mail magazines, etc., are delivered to the car-mounted apparatus 14, also a program for setting a unique ID may be downloaded with the delivered music, video images, news, television programs, mail magazines, etc. The set ID is transmitted from the car-mounted apparatus 14 to the information center and is registered in the information center, which functions as a sales management center. A release key transmitted from the information center is set in the car-mounted apparatus 14. This makes it possible to use the downloaded content.

As described above, in this embodiment, when content, such as data and programs, is updated or newly set for use in the car-mounted apparatus 14, a unique ID can be created and set in the car-mounted apparatus 14. After the ID is registered in the sales management center or the like, a release key is sent, and by setting the release key in the car-mounted apparatus 14, the content can be used.

Accordingly, even in the car-mounted apparatus 14 in a state in which no ID is set in the production stage, a unique ID can be set, whereby content can be used without causing failure in collecting royalties.

In other words, if the car-mounted apparatus 14 belonging to the operator is not a model in which no ID is set in the production stage, a service that needs ID management, such as content updating, can be used by the operator. Also, if a manufacturer, a seller, or the like, of the car-mounted apparatus 14 provides a service, such as content updating, to the operator who possesses a model of the car-mounted apparatus 14 in which no ID is set in the production stage, ID management can be performed, thus ensuring collection of royalties.

A second embodiment of the present invention will now be described. For those identical in structure compared with the first embodiment, by using identical_reference numerals, their descriptions are omitted. Also, a description of an operation and advantages identical to those in the first embodiment is omitted.

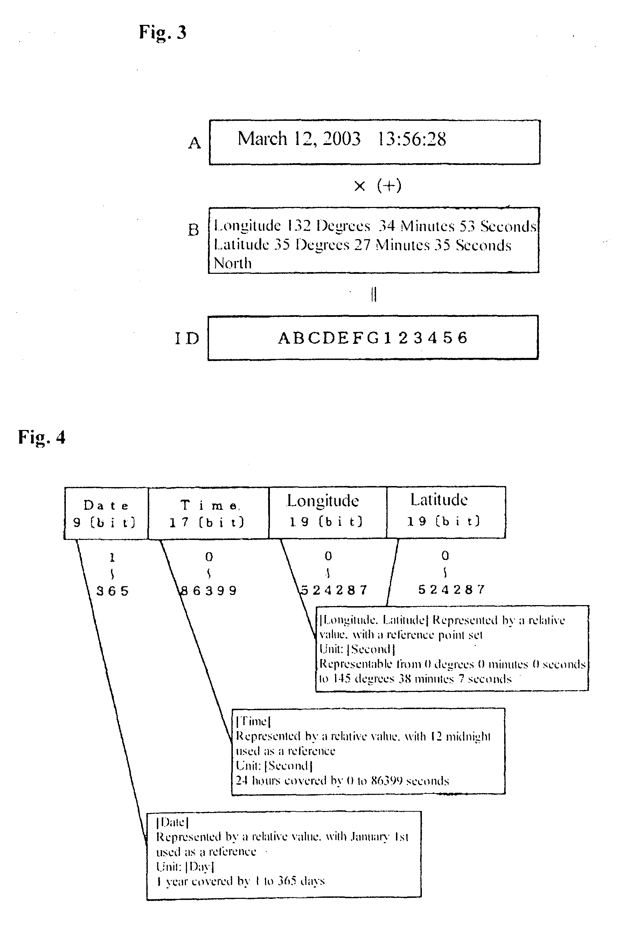

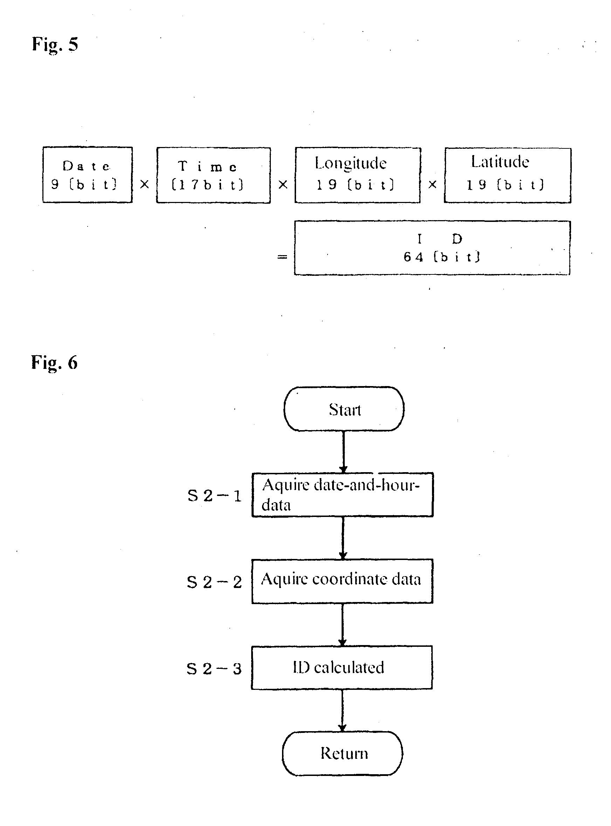

Fig. 3 shows a first example of a method for creating a unique ID executed by a car-mounted apparatus 14 according to the second embodiment of the present invention. Fig. 4 shows a second example of a method for creating a unique ID executed by the car-mounted apparatus 14 according to the second embodiment of the present invention. Fig. 5 shows a third example of a method for creating a unique ID executed by the car-mounted apparatus 14 according to the second embodiment of the present invention. Fig. 6 is a flowchart showing an operation in an ID creating process according to the second embodiment of the present invention.

In the ID creating process in the first embodiment, a randomly extracted code is used to create an ID. Thus, it is possible that a single ID may be set in different car-mounted apparatuses 14, even if the possibility is very low. Accordingly, in the ID creating process in this embodiment, an ID can be created based on data representing the present date and time and the present position.

In this case, as shown in Fig. 3, data A that is date-and-time data representing the present date and time, and data B that is coordinate data representing the present position of the car-mounted apparatus 14 are acquired, and data A and data B are added up or multiplied together to create an ID. Data A consists of a month, a day, a year, hours, minutes, and seconds, and is, for example, March 12, 2003, 13:56:28, as shown in Fig. 3. Although data A can be acquired from a timepiece (not shown) included in the car-mounted apparatus 14, data A may preferably be acquired from GPS data emitted from the GPS satellite by the GPS sensor 21, from a falsification preventing viewpoint.

In addition, data B consists of latitude and longitude, and is, for example, longitude 132 degrees 34 minutes 53 seconds east and latitude 35 degrees 27 minutes 35 seconds north, as shown in Fig. 3. Although data B can be acquired from the geomagnetic sensor 22, the distance sensor 23, the steering sensor 24, the beacon sensor 25, the gyrosensor 26, or the like, data B may preferably be acquired from GPS data emitted from the GPS satellite by the GPS sensor 21, from a falsification preventing viewpoint.

When data A and data B are added up to create an ID, as shown in Fig. 4, data A and data B in digitized form are added up. Here, for convenience of description, the year in data A is omitted.

In this case, the date, that is, a month and a day, are represented by a relative value, with January 1st used as a reference. Specifically, the date is represented by 9-bit numerical data, and January 1st to December 31 are represented by numeric values of 1 to 365. Also, a time, that is, hours, minutes, and seconds, are represented by relative values, with twelve midnight used as a reference. Specifically, the time is represented by 17-bit numerical data, and 00:00:00 a.m. to 11:59:59 p.m. are represented by numeric values of 0 to 86399. In addition, longitude, that is, degrees, minutes, and seconds, are represented by relative values, with a reference point set. Specifically, longitude is represented by 19-bit numeric data, and 0 degrees 0 minutes 0 seconds to 145 degrees 38 minutes 7 seconds are represented by numeric values of 0 to 524287. Furthermore, latitude, that is, degrees, minutes, and seconds, are represented by numeric values, with a reference point set. Specifically, also latitude is represented by 19-bit numeric data, and 0 degrees 0 minutes 0 seconds to 145 degrees 38 minutes 7 seconds are represented by numeric values of 0 to 524287.

Based on the result of adding numeric values representing the date, time, longitude, and latitude, from a combination of characters, such as numerals and alphabets, symbols, etc., an ID, for example, "ABCDEFG123456" as shown in Fig. 3, is created. Encrypted numeric values, obtained by permuting bits of the numeric data items representing the date, time, longitude, and latitude, may also be added up.

When data A and data B are multiplied together to create an ID, as shown in Fig. 5, data A and data B in digitized form are multiplied together. Here, for convenience of description, the year in data A is omitted. In this case, since numeric values respectively representing a date, a time, longitude, and latitude are similar to those in the case of creating an ID by adding data A and data B, as shown in Fig. 4, a description of this case is omitted. Based on 64-bit numeric data, which is the result of multiplying the date, time, longitude, and latitude together, from a combination of characters, such as numerals and alphabets, symbols, etc., an ID, for example, "ABCDEFG123456" as shown in Fig. 3, is created.

The process is described below with reference to a flowchart of Fig. 6.
Step S2-1. Date-and-hour data is acquired.
Step S2-2. Coordinate data is acquired.
Step S2-3. An ID is calculated.

As described above, in the ID creating process in this embodiment, an ID is created based on data representing the present date and time, and data representing the present position. Accordingly, a possibility that a single ID is set in different car-mounted apparatuses 14 can be reduced, thus efficiently preventing ID falsification.

A third embodiment of the present invention is described below. For those identical in structure compared with the first and second embodiments, by using identical reference numerals, descriptions thereof are omitted. Also, a description of an operation and advantages identical to those in the first and second embodiments is omitted.

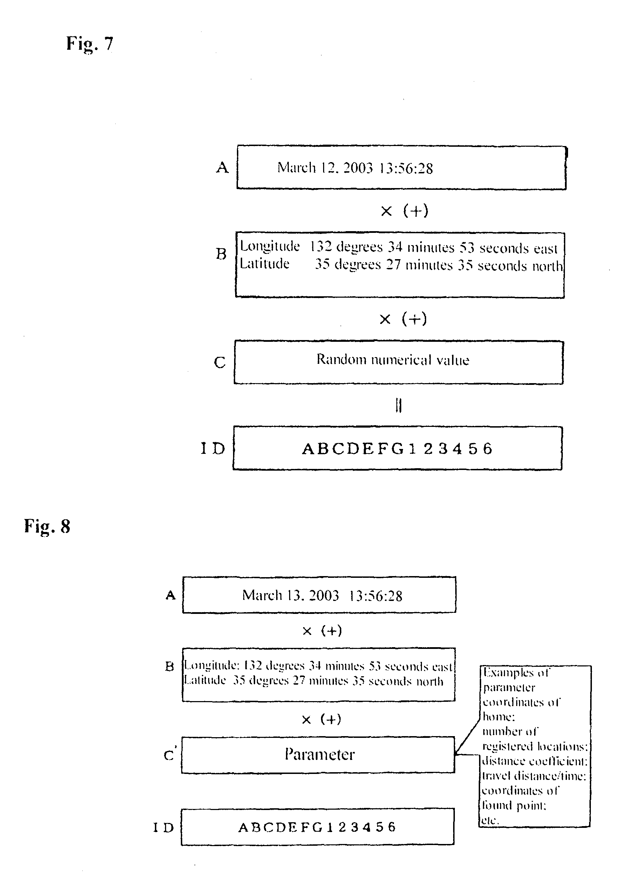

Fig. 7 shows a method for creating a unique ID executed by the car-mounted apparatus 14 according to the third embodiment of the present invention.

In the ID creating process in the second embodiment, the ID is created based on data representing the present date and time, and data representing the present position. Thus, in a case in which, in each of a plurality of car-mounted apparatuses 14 positioned at almost the same place, the ID creating process is executed at the same time, a single ID is set in the plurality of car-mounted apparatuses 14. Accordingly, in this embodiment, an ID is created based on data representing the present date and time, data representing the present position, and a randomly acquired numeric value.

In this case, as shown in Fig. 7, data A that is date-and-time data representing the present date and time, data B that is coordinate data representing the present position of a car-mounted apparatus 14, and data C that is a random numeric value are acquired, and data A, data B, and data C are added up or multiplied together to create an ID. A description of data A and data B is omitted since both are similar to those in the second embodiment.

Data C consists of 4 bytes representing 430,000 random numeric values generated by, for example, a random-number generating algorithm. Based on numeric data obtained by adding up or multiplying together data A, data B, and data C, from a combination of characters, such as numerals and alphabets, symbols, etc., an ID, for example, "ABCDEFG123456" shown in Fig. 7, is created.

As described above, in the ID creating process in this embodiment, an ID is created based on data representing the present date and time, data representing the present position, and a randomly acquired numeric value. Accordingly, even if, in each of a plurality of car-mounted apparatuses 14 positioned at almost the same place, the ID creating process is executed at the same time, a single ID is prevented from being set.

A fourth embodiment of the present invention is described below. For those identical in structure compared with the first to third embodiments, by using identical reference numerals, their descriptions are omitted. Also, a description of an operation and advantages identical to those in the first to third embodiments is omitted.

Fig. 8 shows a method for creating an ID unique to a car-mounted apparatus according to the fourth embodiment of the present invention.

In the ID creating process in this embodiment, instead of the randomly acquired numeric value in the third embodiment, a parameter concerning the car-mounted apparatus 14 is used to create an ID.

In this case, as shown in Fig. 8, data A that is date-and-time data representing the present date and time, data B that is coordinate data representing the present position, and data C' that is a parameter are acquired, and data A, data B, and data C' are added up or multiplied together to create an ID. A description of data A and data B is omitted since both are similar to those in the second embodiment.

Data C' is an internal parameter concerning the car-mounted apparatus 14, which functions as a navigation apparatus. It is, for example, coordinates of home which is registered in the car-mounted apparatus 14 beforehand, the number of registered locations, a distance coefficient, a travel distance or travel time of the vehicle, coordinates of a location where a found facility exists, or the like, and is, represented by a numeric value. Based on numeric data obtained by adding up or multiplying together data A, data B, and Data C', from a combination of characters, such as numerals and alphabets, symbols, etc., an ID, for example, "ABCDEFG123456" shown in Fig. 8, is created.

As described above, in the ID creating process in this embodiment, an ID is created based on data representing the present date and time, data representing the present position, and a parameter concerning the car-mounted apparatus 14. Accordingly, even if, in each of a plurality of car-mounted apparatuses 14 positioned at almost the place, the ID creating process is executed at the same time, a single ID is prevented from being set.

As will be understood from the foregoing description, the present invention makes it possible to use content, such as various types of data and programs, without failure in collecting royalties by enabling a unique ID to be set in even an apparatus in which no ID is set in the production stage.

Although the present invention has been described above with reference to preferred embodiments, the present invention is not limited to those specific embodiments, but various modifications are possible without departing from the spirit and scope of the invention which is limited solely by the appended claims.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention.

## Claims

1. An information processing apparatus using an ID, comprises a storage medium (16) having an ID setting program and content stored therein, and processing means (17) for reading the program and content stored in the storage medium (16) to set an ID, wherein the processing means (17) sets, in the apparatus, the content which is made usable by setting a release key in the apparatus and the ID setting program; executes processing in accordance with the ID setting program; and creates an ID unique to said apparatus, the ID being registered to enable said release key to be acquired.

2. An information processing apparatus using an ID according to claim 1, wherein the ID is created based on a randomly acquired numeric value.

3. An information processing apparatus using an ID according to claim 1 or 2, further comprising present position detecting means (15) for detecting the present position of a vehicle, wherein the ID is created based on data representing the present position of the vehicle, and data representing the present date and time.

4. An information processing apparatus using an ID according to any one of claims 1 to 3, wherein the ID is created based on a parameter concerning said apparatus.

5. An information processing apparatus using an ID according to claim 3 or 4, wherein said content is map information, and the information processing apparatus further comprises a display unit (35) for displaying the present position of the vehicle on a map based on the present position of the vehicle detected by said present position detecting means (15).
